# EUROPEAN PATENT APPLICATION

(11) **EP 1 850 232 A2**
(43) Date of publication of application: **31.10.2007**
(21) Application number: 07106143.6
(22) Date of filing: 13.04.2007
(51) Int. Cl.: G06F 11/36

(54) **Simulator**

(30) Priority: 27.04.2006 JP 2006123523
(71) Applicant: MATSUSHITA ELECTRIC INDUSTRIAL CO., LTD, Kadoma-shi, Osaka 571-8501 (JP)
(72) Inventor: Kawai, Yoshinao c/o Matsushita Electric Industrial Co Ltd Intellectual Property Rights Operations Co IP Development Cente Ltd, Osaka-shi Osaka 540-6319 (JP)
(74) Representative: Zimmer, Franz-Josef

(57) **Abstract**

Simulations may be carried out in an effective manner even with respect to any types of programs.

A simulator is provided with: a simulation executing unit for executing a simulation of a read program, and for producing a simulation status information while the simulation is executed; a mode recognizing unit for recognizing a mode designated from a plurality of modes related to output timing as to the simulation status information from the simulation executing unit; a simulation control unit for controlling the execution of the simulation by the simulation executing unit in response to the mode recognized by the mode recognizing unit; and a status input/output unit for acquiring the simulation status information outputted from the simulation executing unit, and for inputting the acquired simulation information to the simulation executing unit. In the simulator, output timing different from each other is set to the plurality of modes. The simulation control unit controls the simulation executing unit to output the simulation status information at output timing which corresponds to the recognized mode.

## Description

### BACKGROUND OF THE INVENTION

### 1. Field of the Invention

The present invention is related to a simulator which outputs simulation status information at timing corresponding to a designated mode while a simulation is carried out.

### 2. Description of the related art

In the case where installation programs are newly developed, such a verification should be performed so as to verify whether or not accomplished installation programs can be executed in accordance with intentions of program designers. When hardware for executing the installation programs has not yet been completed, the verification is carried out by employing software simulations in order to achieve earlier development of software.

In the case where the accomplished installation programs cannot run in accordance with the intentions of the program designers, debugging works must be performed with respect to the installation programs. When debugging works are carried out, simulations are performed many times in order to remove bugs. In such a case that long time is required to execute the simulations, long time durations are required for debugging works. To this end, such a function is employed by which all of register value s and all of contents stored in memories at certain timing while the simulations are executed are stored to be suspended. When the above-described store/suspend function is utilized, the register values and the stored contents of the memories can be restored to the suspended statuses. As a result, simulations need not be carried out from the beginning stages. Accordingly, time durations required for executing the debugging works can be shortened. Since programs which are installed in terminals such as portable telephones contain a huge number of verification items, the above-explained store/suspend function is very useful.

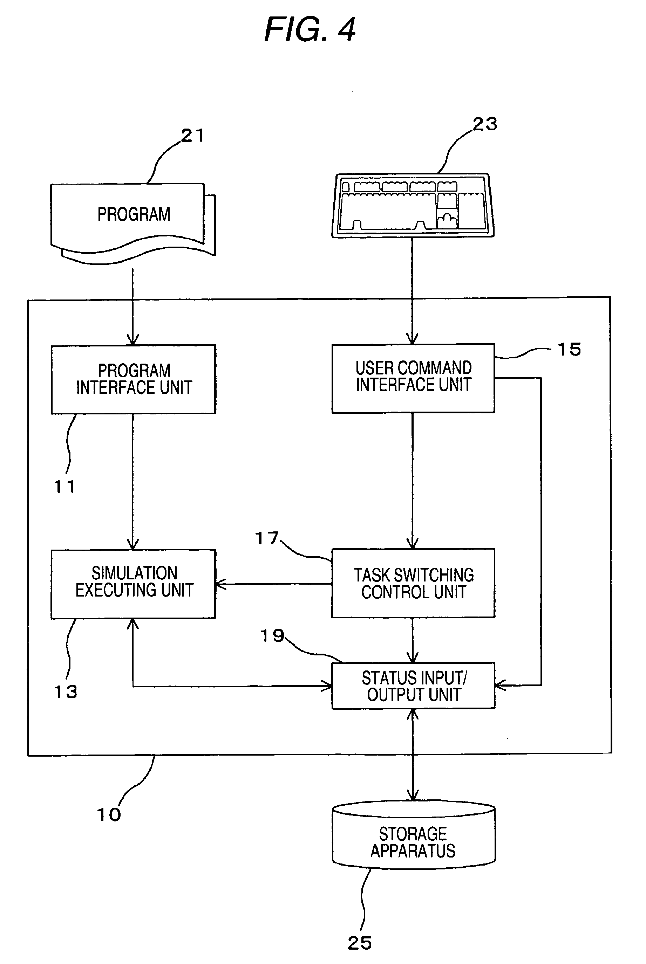

Fig. 4 is a block diagram for showing an arrangement of a conventional simulator 10. The simulator 10 shown in Fig. 10 is equipped with a program interface unit 11, a simulation executing unit 13, a command interface unit 15, a task switching control unit 17, and a status input/output unit 19.

The program interface unit 11 corresponds to an interface which reads a program 21 in the simulator 10. The simulation executing unit 13 performs a simulation of the program 21 which is read therein via the program interface unit 11. Also, the simulation executing unit 13 interrupts a simulation in response to an instruction issued from the task switching control unit 17, and outputs information (will be referred to as "simulation status information" hereinafter) related to a simulation status when the simulation is interrupted.

The command interface unit 15 corresponds to an interface used to read a command entered from an input terminal 23 which is manipulated by a user of the simulator 10. The task switching control unit 17 recognizes switching of a task in response to a command read via the command interface unit 15, and controls the simulation executing unit 13 in such a manner that the simulation status information is outputted by the simulation executing unit 13 when the task is switched.

The status input/output unit 19 acquires simulation status information outputted from the simulation executing unit 13, and stores the acquired simulation status information into an external storage apparatus 25. Also, the status input/output unit 19 inputs simulation status information acquired from the storage apparatus 25 into the simulation executing unit 13. The simulation executing unit 13 into which the simulation status information has been entered restores a simulation status which is indicated by the entered simulation status information.
Patent Publication 1: JP-A-6-131203

When the above-described simulator 10 is employed so as to debug a program in which switching of tasks is not performed, and/or another program containing such tasks which require a huge simulation time, a long time is necessarily required in order to reproduce failure statuses, so that the simulations by the conventional simulator 10 cannot be carried out in effective manners. Also, even in such a case that a quality of a program for executing verification is high, a time period during which information required to restore a failure status is stored is constant. As a result, an execution speed of a simulation is lowered, and a total step number of debugging works is increased.

### SUMMARY OF THE INVENTION

An object of the present invention is to provide a simulator capable of executing simulations in an effective manner with respect to any sorts of programs.

The present invention provides the below-mentioned simulator: That is, the simulator is comprised of: a simulation executing unit for executing a simulation of a read program, and for producing a simulation status information while the simulation is executed; a mode recognizing unit for recognizing a mode designated from a plurality of modes related to output timing as to the simulation status information from the simulation executing unit; a simulation control unit for controlling the execution of the simulation by the simulation executing unit in response to the mode recognized by the mode recognizing unit; and a status input/output unit for acquiring the simulation status information outputted from the simulation executing unit, and for inputting the acquired simulation information to the simulation executing unit; in which output timing different from each other is set to the plurality of modes; and the simulation control unit controls the simulation executing unit to output the simulation status information at output timing which corresponds to the recognized mode.

In the simulator, the simulation executing unit may restore a simulation status which is represented by the simulation status information entered from the status input/output unit.

In the simulator, the simulation control unit includes a plurality of timing control units corresponding to the respective plural modes; and the plurality of timing control units may include at least two sets of: a time mode control unit corresponding to a time mode in which output timing of the simulation status information has been set at a predetermined time interval; a cycle mode control unit corresponding to a cycle mode in which output timing of the simulation status information has been set at a predetermined cycle number interval; an interrupt mode control unit corresponding to an interrupt mode in which output timing of the simulation status information has been set in a predetermined interrupt number interval; a memory access mode control unit corresponding to a memory access mode in which output timing of the simulation status information has been set in a predetermined memory access interval; a flag changing mode control unit corresponding to a flag changing mode in which output timing of the simulation status information has been set in a predetermined flag changing number interval; and a task switching mode control unit corresponding to a task switching mode in which output timing of the simulation status information has been set in a predetermined task switching number interval.

In the simulator, the predetermined time interval set in the time mode, the predetermined cycle number set in the cycle mode, the predetermined interrupt number set in the interrupt mode, the memory access number set in the memory access mode, the predetermined flag changing number set in the flag changing mode, and the predetermined task switching number set in the task switching mode may be set by a user of the simulator.

In the simulator, said predetermined interrupt number set in the interrupt mode may be a total interrupt number directed to all of interrupts.

In the simulator, the predetermined interrupt number set in the interrupt mode may be a total interrupt number directed to interrupts designated by the user of the simulator.

In the simulator, the predetermined memory access number set in the memory access mode may be a total number at which a memory of all address ranges is accessed.

In the simulator, the predetermined memory access number set in the memory access mode may be a total number at which a memory of an address range designated by the user of the simulator is accessed.

In the simulator, the flag changing number set in the flag changing mode may be a total number of changes of flags directed to all of the flags.

In the simulator, the flag changing number set in the flag changing mode may be a total number of changes of flags directed to flags designated by the user of the simulator.

In the simulator, the task switching number set in the task switching mode may be a total switching number of tasks directed to all of tasks.

In the simulator, the task switching number set in the task switching mode may be a total switching number of tasks directed to tasks designated by the user of the simulator.

In accordance with the simulator related to the present invention, the simulations can be carried out in the effective manners even for any types of programs.

### BRIEF DESCRIPTION OF THE DRAWINGS

Fig. 1 is a block diagram for showing an arrangement of a simulator of an embodiment mode of the present invention.
Fig. 2 is a block diagram for representing an internal arrangement of a simulation control unit.
Fig. 3 is a flow chart for explaining operations of the simulator of the embodiment mode.
Fig. 4 is a block diagram for showing the arrangement of the conventional simulator.

### DESCRIPTION OF THE PREFERRED EMBODIMENTS

Referring now to drawings, a description is made of embodiment modes of the present invention.

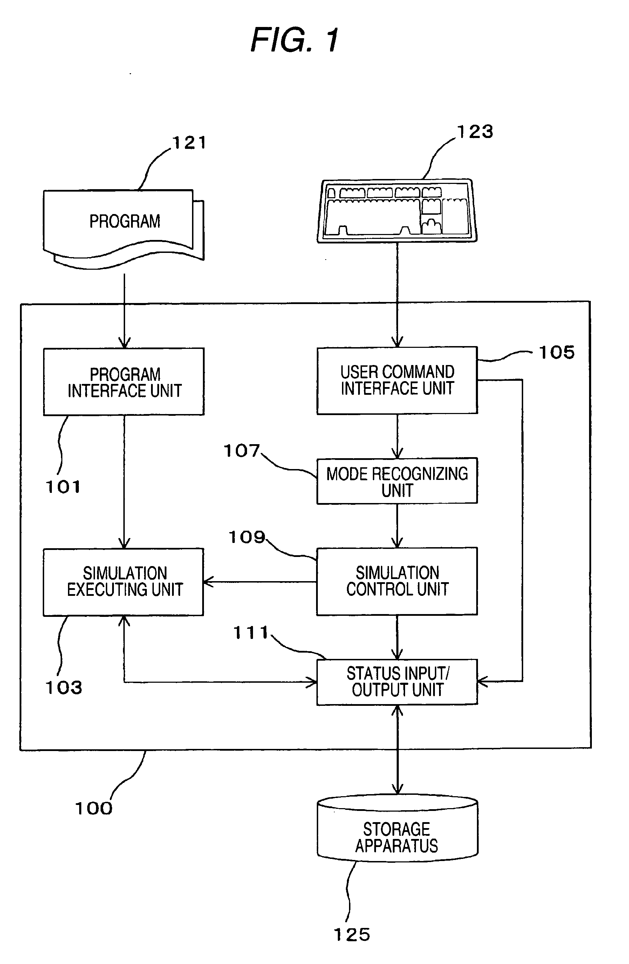

Fig. 1 is a block diagram for representing an arrangement of a simulation 100 according to an embodiment mode of the present invention. The simulator 100 shown in Fig. 1 is equipped with a program interface unit 101, a simulation executing unit 103, a command interface unit 105, a mode recognizing unit 107, a simulation control unit 109, and a status input/output unit 111.

The program interface unit 101 corresponds to an interface which reads a program 121 in the simulator 100. The simulation executing unit 103 performs a simulation of the program 121 which is read therein via the program interface unit 101. Also, the simulation executing unit 103 interrupts a simulation in response to an instruction issued from the simulation control unit 107, and outputs information (will be referred to as "simulation status information" hereinafter) related to a simulation status when the simulation is interrupted.

The command interface unit 105 corresponds to an interface used to read a command entered from an input terminal 123 which is manipulated by a user of the simulator 100. The mode recognizing unit 107 recognizes a command read via the command interface unit 105. The simulation control unit 109 controls an execution of a simulation by the simulation executing unit 103 in response to a mode recognized by the mode recognizing unit 107.

The status input/output unit 111 acquires simulation status information outputted from the simulation executing unit 103, and stores the acquired simulation status information into an external storage apparatus 125. Also, the status input/output unit 111 inputs simulation status information acquired from the storage apparatus 125 into the simulation executing unit 103. At this time, the simulation executing unit 103 restores a simulation status which is indicated by the entered simulation status information.

Precisely speaking, in such a case where a command for commanding that a simulation status designated by the user is restored is entered via the command interface unit 105 to the status input/output unit 111, the status input/output unit 111 acquires such a simulation status information in response to the entered command from the storage apparatus 125. When the acquired simulation status information is inputted to the simulation executing unit 103, the simulation executing unit 103 restores a simulation status which is indicated by the entered simultaneous status information. It should also be noted that when a command for commanding that a designated simulation status is restored is inputted, it is preferable that a simulation as to a program in response to the input command is carried out in the simulation executing unit 103.

In the present embodiment mode, plural sets of the below-mentioned commands have been prepared which can be entered from an input terminal. The plural modes of the present embodiment mode are a time mode, a cycle mode, an interrupt mode, a memory access mode, a flag changing mode, and a task switching mode.

In the time mode, output timing of simulation status information has been set in a predetermined time interval (for instance, 1 time per 1 second). In the cycle mode, output timing of simulation status information has been set in a predetermined cycle number interval (for example, 1 time per 100 cycles). In the interrupt mode, output timing of simulation status information has been set in a predetermined interrupt number interval (for instance, 1 time per 10 times). In the memory access mode, output timing of simulation status information has been set in a predetermined memory access interval (for example, 1 time per 100 cycles). In the flag charge mode, output timing of simulation status information has been set in a predetermined flag changing number interval (for example, 1 time per 10 times). In the task switching mode, output timing of simulation status information has been set in a predetermined task switching number interval (for example, 1 time per 10 times).

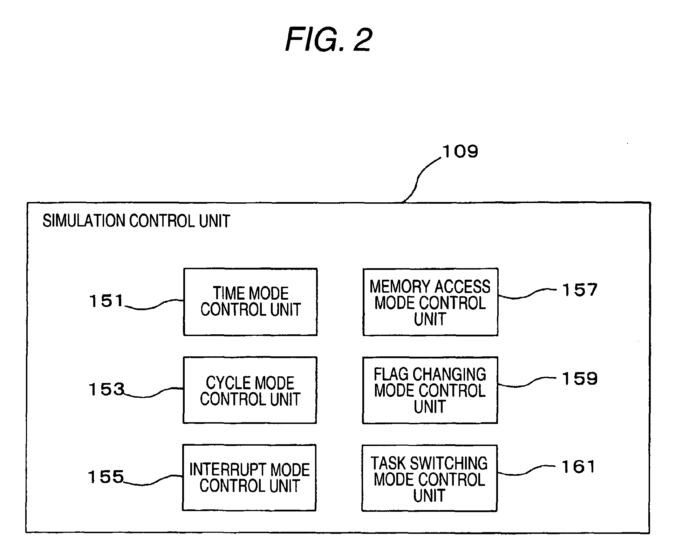

The simulation control unit 109 contains a plurality of timing control units in correspondence with the respective plural commands. Fig. 2 is a block diagram for showing an internal arrangement of the simulation control unit 109. As shown in Fig. 2, the simulation control unit 109 contains a time mode control unit 151 corresponding to the time mode; a cycle mode control unit 153 corresponding to the cycle mode; an interrupt mode control unit 155 corresponding to the interrupt mode; a memory access mode control unit 157 corresponding to the memory access mode; a flag changing mode control unit 159 corresponding to the flag changing mode; and further, a task switching mode control unit 161 corresponding to the task switching mode.

The simulation control unit 109 executes such a timing control unit corresponding to a mode which is recognized by the mode recognizing unit 107. It should also be understood that a time in the time mode, an interrupt number in the cycle mode, a memory access number in the memory access mode, a flag changing number in the flag changing mode; and a task switching number in the task switching mode correspond to either times on numbers which are set by the user of the simulator 100. Either a time internal or a number which is set by the user is read via the command interface unit 105, and then, is recognized by the mode recognizing unit 107, and thereafter, is set to the relevant timing control unit.

It should also be noted that the interrupt number which is set to the interrupt mode may be defined as a total number directed to all of interrupts, or may be alternatively defined as a total number directed to interrupts designated by the user. Also, the memory access number which is set to the memory access code may be defined as a total access number directed to all address range of a memory (not shown), or may be alternatively defined as a total access number directed to an address range designated by the user. Also, the flag changing number which is set to the flag changing mode may be defined as a total number directed to all of flags, or may be alternatively defined as a total number of tasks designated by the user. Also, the task switching number which is set to the task switching mode may be defined as a total number directed to all of tasks, or may be alternatively defined as a total number of tasks designated by the user.

The simulation executing unit 103 interrupts a simulation at timing defined in accordance with an instruction outputted by a timing control unit corresponding to a mode selected by the user, and outputs simulation status information indicative of a simulation status when this simulation is interrupted.

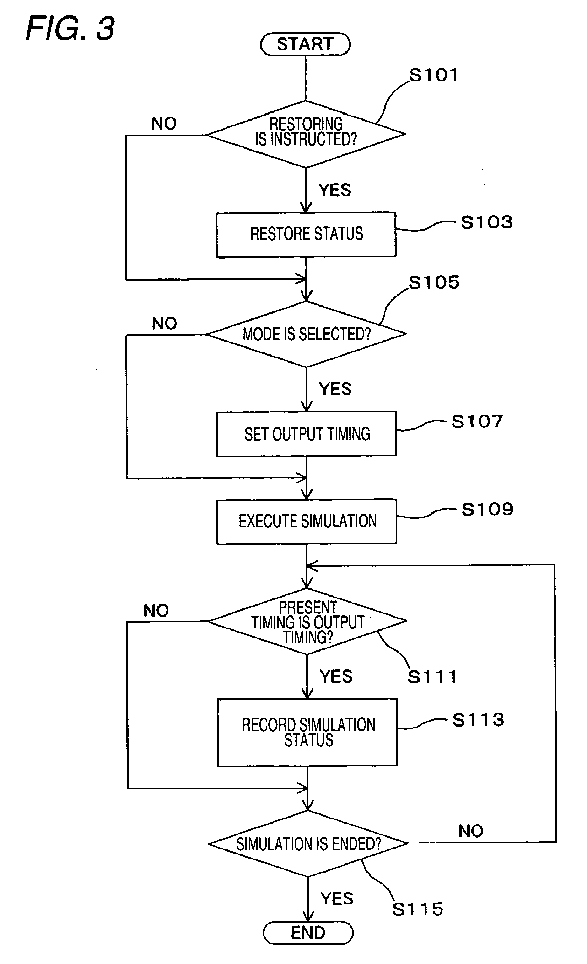

Next, a description is made of operations of the simulator 100 according to the present embodiment mode. Fig. 3 is a flow chart for describing the operations related to the simulator 100 of the present embodiment mode. As shown in Fig. 3, the simulator 100 judges whether or not restoring of a simulation status is instructed from the user (step S101). When the simulator 100 judges that restoring of the simulation status is instructed by the user, the process operation is advanced to a step S103, whereas when the simulator 100 judges that restoring of the simulation status is not instructed by the user, the process operation is advanced to a step S105. In the step S103, the status input/output unit 111 acquires simulation status information from the storage apparatus 125 and inputs the acquired simulation status information into the simulation executing unit 103. The simulation executing unit 103 restores a simulation status based upon the inputted simulation status information.

In the step S105, the simulator 100 judges whether or not a mode is selected by the user. In the step S105, when the mode is selected, the process operation is advanced to a step S107, whereas when the mode is not selected, the process operation is advanced to a step S109. In the step S107, output timing of the mode selected by the user is set to the simulation control unit 109. In the step S109, the simulation executing unit 103 performs a simulation.

While the simulation is carried out by the simulation executing unit 109, the simulation control unit 109 monitors whether or not the present timing is the set output timing (step S111). Then, when the simulation control unit 109 judges that the present timing is the output timing set in the step S111, the process operation is advanced to a step S113, whereas when the simulation control unit 109 judges that the present timing is not the output timing set in the step S111, the process operation is advanced to a step S115. In the step S113, the simulation status information outputted from the simulation executing unit 103 is stored in the storage apparatus 125. In the step S115, the simulator 100 judges whether or not the simulation is accomplished. The process operations defined from the step S111 to the step S115 are executed in a repetition manner until the simulation is accomplished.

In accordance with the simulator 100 of the present embodiment mode, with respect to the timing for reproducing the failure statuses, the plurality of modes different from each other have been prepared, and the simulation status at such a timing corresponding to the selected mode is stored, while this mode is selected from the above-described plural modes by considering the quality of the program. As a consequence, even when the program where switching of the tasks is not present is simulated, and also, such a program which requires a huge simulation time is simulated, a desirable simulation status can be readily restored with a short time. Also, since the user selects the optimum mode, a total output time of the simulation status information is restricted. As a result, it is possible to avoid that the execution speed of the simulation is lowered. Accordingly, a total number of debugging works executed by the simulation can be reduced. As a consequence, the simulation 100 can simulate any types of programs in an effective manner.

## Claims

1. A simulator comprising:
a simulation executing unit for executing a simulation of a read program, and for producing a simulation status information while the simulation is executed;
a mode recognizing unit for recognizing a mode designated from a plurality of modes related to output timing as to the simulation status information from the simulation executing unit;
a simulation control unit for controlling the execution of the simulation by said simulation executing unit in response to the mode recognized by said mode recognizing unit; and
a status input/output unit for acquiring the simulation status information outputted from said simulation executing unit, and for inputting the acquired simulation information to said simulation executing unit; wherein:
output timing different from each other is set to said plurality of modes; and
said simulation control unit controls said simulation executing unit to output the simulation status information at output timing which corresponds to said recognized mode.

2. The simulator as claimed in claim 1 wherein:
said simulation executing unit restores a simulation status which is represented by the simulation status information entered from said status input/output unit.

3. The simulator as claimed in claim 1 wherein:
said simulation control unit includes a plurality of timing control units corresponding to said respective plural modes; and
said plurality of timing control units include at least two sets of:
a time mode control unit corresponding to a time mode in which output timing of said simulation status information has been set at a predetermined time interval;
a cycle mode control unit corresponding to a cycle mode in which output timing of said simulation status information has been set at a predetermined cycle number interval;
an interrupt mode control unit corresponding to an interrupt mode in which output timing of said simulation status information has been set in a predetermined interrupt number interval;
a memory access mode control unit corresponding to a memory access mode in which output timing of said simulation status information has been set in a predetermined memory access interval;
a flag changing mode control unit corresponding to a flag changing mode in which output timing of said simulation status information has been set in a predetermined flag changing number interval; and
a task switching mode control unit corresponding to a task switching mode in which output timing of said simulation status information has been set in a predetermined task switching number interval.

4. The simulator as claimed in claim 3 wherein:
said predetermined time interval set in said time mode, said predetermined cycle number set in said cycle mode, said predetermined interrupt number set in said interrupt mode, said memory access number set in said memory access mode, said predetermined flag changing number set in said flag changing mode, and said predetermined task switching number set in said task switching mode are set by a user of said simulator.

5. The simulator as claimed in claim 3 wherein:
said predetermined interrupt number set in said interrupt mode is a total interrupt number directed to all of interrupts.

6. The simulator as claimed in claim 3 wherein:
said predetermined interrupt number set in said interrupt mode is a total interrupt number directed to interrupts designated by the user of said simulator.

7. The simulator as claimed in claim 3 wherein:
said predetermined memory access number set in said memory access mode is a total number at which a memory of all address ranges is accessed.

8. The simulator as claimed in claim 3 wherein:
said predetermined memory access number set in said memory access mode is a total number at which a memory of an address range designated by the user of the simulator is accessed.

9. The simulator as claimed in claim 3 wherein:
said flag changing number set in said flag changing mode is a total number of changes of flags directed to all of the flags.

10. The simulator as claimed in claim 3 wherein:
said flag changing number set in said flag changing mode is a total number of changes of flags directed to flags designated by the user of the simulator.

11. The simulator as claimed in claim 3 wherein:
said task switching number set in said task switching mode is a total switching number of tasks directed to all of tasks.

12. The simulator as claimed in claim 3 wherein:
said task switching number set in said task switching mode is a total switching number of tasks directed to tasks designated by the user of the simulator.
